# EUROPEAN PATENT SPECIFICATION

(11) **EP 0 748 461 B1**
(45) Date of publication and mention of the grant of the patent: **02.08.2000**
(21) Application number: 95909895.5
(22) Date of filing: 02.03.1995
(51) Int. Cl.: G02B 6/00, G02B 6/44, G02B 6/52

(54) **Method of installing an optical fibre**
Verfahren zum Installieren einer optischen Faser
Procédé d'installation d'une fibre optique

(30) Priority: 02.03.1994 EP 94301511
(43) Date of publication of application: 18.12.1996
(73) Proprietor: BRITISH TELECOMMUNICATIONS public limited company, London EC1A 7AJ (GB)
(72) Inventor: FROST, Peter, Lewis, John, Ipswich Suffolk IP5 7QF (GB); JESSOP, Paul, David, Clacton-on-Sea Essex CO15 3PW (GB)
(74) Representative: Garrison, Christopher Sinclair
(86) International application number: PCT/GB95/00450
(87) International publication number: WO 95/23988

(56) References cited:
- EP-A- 0 292 037
- DE-A- 3 530 344
- DE-A- 3 911 095
- DE-U- 9 114 452
- US-A- 4 596 381
- REVIEW ELECTRICAL COMMUNICATION LABORATORIES, vol.32, no.4, 1984, JP pages 636 - 645 S.KUKITA 'design and performance of optical drop and indoor cable'
- ATT TECHNOLOGY, vol.2, no.1, 1987, US pages 22 - 29 T.F.MCINTOSH 'lightwave technolgy enters the premise market'

## Description

This invention relates to a method of providing an optical communications route between a first location and a second location, the method comprising moving an optical fibre transmission line comprising at least one optical fibre along a pre-installed tubular pathway which passes from the first location to the second location, the optical fibre transmission line being fed to the tubular pathway by a mechanical pushing process and being propelled along the tubular pathway by the mechanical pushing process and by fluid drag of a gaseous medium passed through the tubular pathway towards the second location.

In the United Kingdom, the telecommunications network includes a trunk network which is substantially completely constituted by optical fibre, and a local access network which is substantially completely constituted by copper pairs. Eventually, it is expected that the entire network, including the access network, will be constituted by fibre.

The ultimate goal is a fixed, resilient, transparent telecommunications infrastructure for the optical access network, with capacity for all foreseeable service requirements. One way of achieving this would be to create a fully-managed fibre network in the form of a thin, widespread overlay for the whole access topography, as this would exploit the existing valuable access network infrastructure. Such a network could be equipped as needs arise; and thereby could result in capital expenditure savings, since the major part of the investment will be the provision of terminal equipment on a 'just in time' basis. It should also enable the rapid provision of extra lines to new or existing customers, and flexible provision or reconfiguration of telephony services.

In order to be completely future proof, the network should be single mode optical fibre, with no bandwidth limiting active electronics within the infrastructure. Consequently, only passive optical networks (PONs) which can offer this total transparency and complete freedom for upgrade, should be considered.

In a PON, a single optical fibre is fed out from the exchange head-end (HE), this fibre being fanned out via passive optical splitters at cabinets and distribution points (DPs) to feed optical network units (ONUs). The ONUs can be in customers' premises, or in the street serving a number of customers. The use of optical splitters enables sharing of feeder fibre and exchange based optical line termination (OLT) equipment, thereby giving PONs a cost advantage. In the United Kingdom, simplex PONs are planned, so that each customer is serviced by a pair of optical fibres.

In order to achieve the goal of providing a fixed, resilient, transparent telecommunications optical fibre access network, it will be important to minimise the installation costs at each part of the network. The present invention is concerned with minimising the cost of installation of fibre from a customer's premises to the nearest network node, and in particular to a cost-effective way of getting fibre into a customer's premises. In this connection, it should be noted that the preferred way of installing fibre is by the well known fibre blowing process (see EP 108590). In this process, a fibre unit (usually a four-fibre unit for residential premises) is blown through a small diameter (5mm) polyethylene tube.

EP-A-0292037 discloses method of the general kind defined in the first paragraph. In this known method the gaseous medium enters the tubular pathway through an open end thereof.

According to the present invention a method of the general kind defined in the first paragraph is characterised in that the first location is inside a customer's premises, the second location is a node of an optical telecommunications network, the tubular pathway passes through an aperture in a wall of said premises, the end of the tubular pathway inside the customer's premises is provided with a seal for the gaseous medium, the optical fibre transmission line is pushed through the seal by the mechanical pushing process, and the gaseous medium is injected into the tubular pathway through the wall thereof downstream of the seal.

The invention will now be described in greater detail, by way of example, with reference to the accompanying drawings, in which:-
Figure 1 is a perspective view of a fibre insertion tool;
Figure 2 is a perspective view of a mini pan containing an optical fibre unit;
Figure 3 is an exploded perspective view of an air injector unit for use with the tool of Figure 1; and
Figure 4 is a perspective view of the main body of the air injector unit of Figure 3.

When connecting a customer to the nearest network node, it is sometimes preferable to carry out the blowing of the fibre from outside that customer's premises. In order to provide a complete installation path from the customer's NTE to a network node, therefore, it is necessary to provide a separate means for installation of fibre from the NTE through pre-installed blown fibre tubing (not shown), to a fibre blowing unit positioned outside the customer's premises. The tubing will have already been installed from the interior of the premises to the exterior via customer lead in (CLI) apparatus which can guide optical fibre unit though 90° bends without subjecting the fibres of that unit to bends which would lead to an additional optical loss. In this connection it will be appreciated that the tubing has to be fed along the inner wall of the customer's premises and then turned through 90° so as to pass through a hole formed in the wall. It must then be turned through 90° at the outer wall so that it can subsequently be fed along that wall.

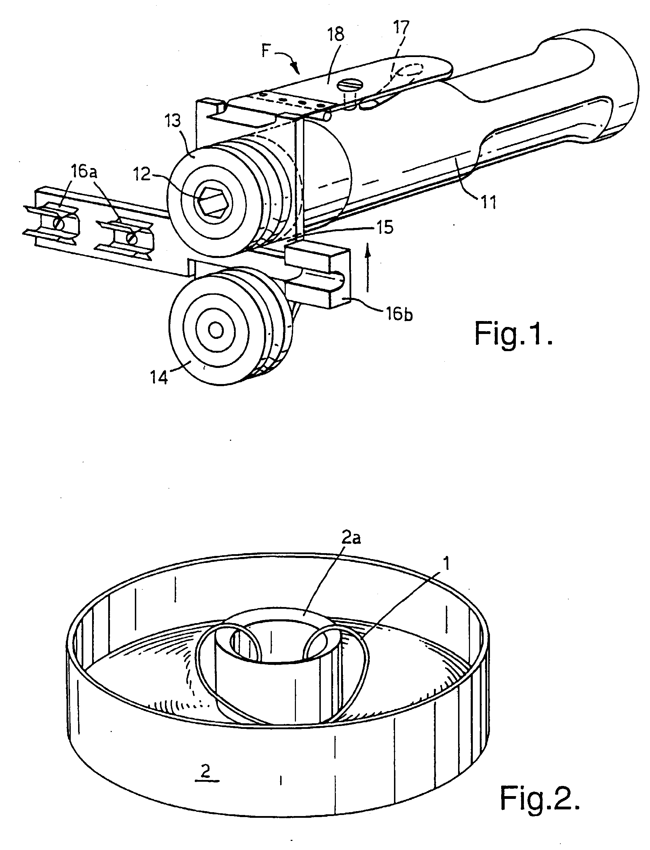

Figure 1 shows a fibre unit installation tool F which can be used for mechanically pushing a fibre unit 1 (typically a four-fibre unit for a residential customer - two of the fibres being for use by the customer, and two being provided as spares) from a mini pan 2 (see Figure 2). The mini pan 2 is a container in which the fibre unit 1 is coiled round a central boss 2a, the free end of the fibre unit being fed away from the mini pan after passing down through the central boss.

The fibre unit installation tool F is a modified form of electric screwdriver, having a motor and a battery (neither of which is shown) housed in a handle portion 11. The motor drives an output shaft 12 via a factory set slipping clutch (not shown). The output shaft 12 is connected to a drive wheel 13, the drive wheel engaging, in use, with an idler wheel 14 mounted on the unit F by means of a support plate 15. The support plate 15 also supports a guide plate assembly 16. The assembly 16 includes a pair of tube connector grips 16a and a tube guide 16b, these being positioned respectively at the entry and exit of the nip between the two wheels 13 and 14. The idler wheel 14 is biased towards the drive wheel 13 by means of a spring 17 which acts between the handle portion 11 and a plate 18 which is pivotally mounted on the handle portion and which carries the support plate 15.

In order to feed the fibre unit 1 from the mini pan 2 positioned within a customer's premises, the pre-installed tubing is positioned in the guide 16b. The free end of the fibre unit is then fed to the nip between the two wheels 13 and 14 of the installation tool F. When the tool F is activated, the fibre unit 1 is driven through the nip by the interengagement of the drive wheel 13 and the idler wheel 14, the fibre unit being fed away from the tool via the grip 16b. The free end of the fibre unit 1 is then inserted into the free end of the tubing which has already been fed to the outside of the customer's premises via the CLI apparatus. The tool F is capable of feeding about 10 metres of the fibre unit 1, and so is quite adequate to feed a sufficient length of the fibre unit to a blowing unit positioned outside the customer's premises. The slipping clutch of the tool F limits the torque that the tool can apply, and so protects the fibre unit 1 during the mechanical pushing process. The tool F is also provided with a reversing mechanism, so that it can be used to remove (pull out) the installed fibre unit 1 should the need arise. Once the free end of the fibre unit 1 has been mechanically pushed through the tubing to the outside of the customer's premises, it is then fed into a further blown fibre tubing (not shown) for blowing through to the network node in the normal way. In this connection, it should be noted that the further blown fibre tubing (the further tubing) will have already been installed from outside the customer's premises to the network node.

The fibre unit 1 in the mini pan 2 is provided with pre-connectorised tails (not shown) for termination on customer electronics (not shown). The advantage of this is that, during installation, the installer does not need a specialist splicing kit to connect the optical fibre unit to the customer electronics. The fibre unit 1 is also provided with a breakout unit (not shown) about 100mm from the pre-connectorised tails. The breakout unit separates the fibres in the fibre unit 1 for connectorisation. In use, the breakout unit will engage with the wheels 13 and 14 of the fibre unit installation tool F to prevent the fibre unit being pushed right through the tubing.

The procedure for installing a fibre unit 1 from within a customer's premises to the nearest network node is as follows:-
1) The further tubing is installed between the network node and the external wall of the customer's premises. This tubing can be routed either via a drop cable or underground ducting.
2) A suitable length of the tubing is pushed through the CLI apparatus from the inside of the premises to the outside.
3) The tubing and the further tubing are then cut to length ready for connectorisation. A guaranteed seal connector (not shown) may then be used to connect the two lengths of tubing together.
4) An O-ring is then positioned over the tubing within the cavity of the wall using a special tool.
5) The fibre unit 1 is then pushed through the tubing from the inside of the customer's premises to the outside using the installation tool F. The fibre unit 1 is pushed only as far as the external connector used to connectorise the tubing and the further tubing.
6) The external connector is removed, and the fibre unit is blown along the further tubing to the network node using standard fibre blowing equipment. The external connector is then re-made, and the fibres of the fibre units are spliced to system fibres within the network node.
7) The pre-connectorised tails of the fibre unit 1 are then terminated on the opto-electronics of the customer's network termination equipment (not shown).

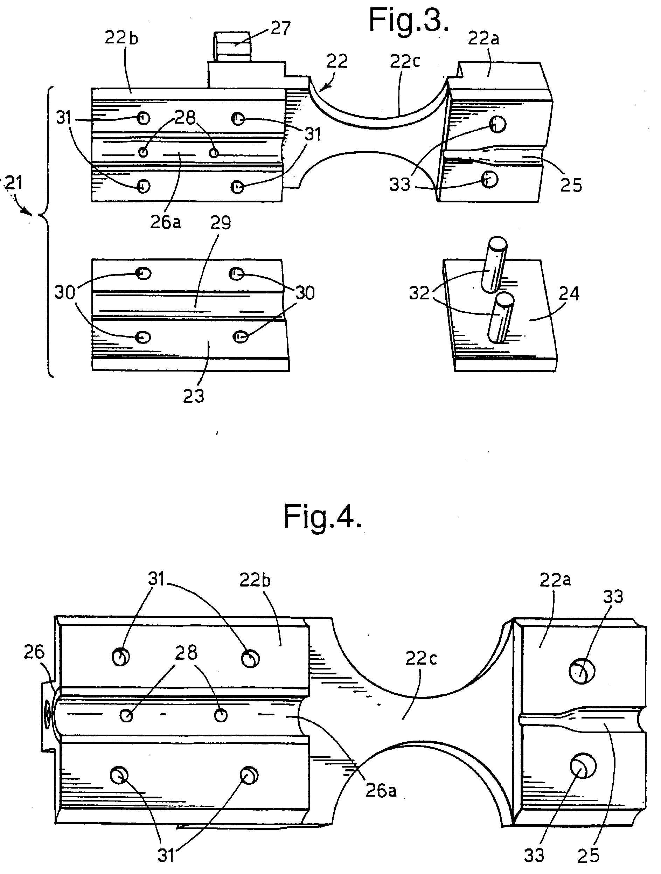

Although the fibre installation tool F described above performs well in installing an optical fibre unit from inside a customer's premises to a conventional blowing unit positioned outside those premises, it is not capable of installing an optical fibre unit from inside a customer's premises all the way to the nearest network node. In most cases, it would be preferable to provide a fibre installation tool that could carry out this installation in one step. In order to do this, the fibre installation tool F of Figures 1 and 2 can be modified by replacing the guide plate assembly 16 by a detachable air injector unit 21 (see Figure 3). The air injector unit 21 is constituted by a main body portion 22 and two clamping plates 23 and 24.

The main body 22 includes a fibre unit input member 22a connected to an injector head/fibre unit output member 22b by a necked body portion 22c. The input member 22a is formed with a groove 25 which is aligned with a groove 26 formed in the injector head 22b. The groove 25 constitutes guide means for a fibre unit (not shown), and the groove 26 is used to hold blown fibre tubing (not shown), which leads to the nearest network node. The injector head 22a is provided with an air input manifold 27 which leads to a pair of air injector needles 28 positioned 15mm apart along the central longitudinal axis of the groove 26.

The plate 23 is formed with a groove 29 which, when the plate is fixed to the injector head 22b by means of screws (not shown) passing through apertures 30 and 31 formed respectively in the plate and the injector head, complement the groove 26 to define a cylindrical housing for the blown fibre tubing. The base of the groove 26 is covered by a rubber mat 26a (see Figure 4). The rubber mat 26a is apertured so that the air injector needles 28 can pass therethrough, the mat providing a seal between the needles and the outer wall of the blown fibre tubing.

The necked body portion 22c of the air injector unit 21 facilitates attachment of the unit to, and detachment from, the support plate 15 of the fibre installation tool F. It also ensures that the input member 22a is positioned at the input side of the nip between the two wheels 13 and 14, and the injector head 22b is positioned at the output side of the nip. The air injector unit 21 is detachably fixed to the support plate 15 by any suitable means, such as detent balls which snap into sockets.

In use, the air injector unit 21 is removed from the support plate 15 so that the fibre unit 1 (not shown in Figures 3 and 4) can be positioned within the blown fibre tubing ready for the installation process. The first step is to remove the clamping plates 23 and 24 from the main body portion 22. The blown fibre tubing is then formed with two punched holes, which are positioned 15mm apart, using a special pair of pliers (not shown). The pliers are provided with a stop member against which the end of the blown fibre tubing can be positioned prior to the piercing process. The stop member is positioned so that the holes are punched predetermined distances from the end of the tubing whereby, when the tubing is placed within the groove 26 with the holes in alignment with the needles 28, the free end of the tubing extends over the necked body portion 22c. The fibre unit 1 is then pushed through a seal (not shown) which is subsequently positioned within the free end of the blown fibre tubing. The seal is constituted by a hollow cylindrical bung provided with a two-start external screw thread by means of which the seal can be screwed into the free end of the tubing. The hollow cylindrical aperture within the seal has a diameter of 1mm, so that the fibre unit 1 is a friction fit within this aperture. The two holes in the tubing are then aligned onto the needles 28, and the clamping plate 23 is screwed onto the output member 22b. The clamping plate 24 is then pushed onto the input member 22a to ensure that the fibre unit 1 is correctly positioned in alignment with the end of the blown fibre tubing. A hose (not shown) is then connected to the air input manifold 27.

The air injector unit 21 is then fixed to the support plate 15, care being taken to ensure that the idler wheel 14 does not foul the seal. The fibre unit 1 is then driven into the tubing by activating the tool F so that the fibre unit is driven through the nip between the wheels 13 and 14. Once the fibre unit 1 is positioned within the blown fibre tubing, a compressor (not shown) attached to the hose is turned on, so that the fibre unit is driven into the tubing by the fluid drag of the air passing along the tubing. The compressor is arranged to supply air at 1.034 x 10⁶ Pa (150 psi). This installation process is assisted by the mechanical drive constituted by the interengagement of the drive wheel 13 and the idler wheel 14 of the tool F with the fibre unit.

Installation is continued until the breakout unit at the free end of the fibre unit 1 seats within the wider portion of the groove 25 in the input member 22a. With the air still on, the injector unit 21 is then removed from the support plate 15, the clamping plate 24 is removed from the input member 22a, and a breakout unit (not shown) is pushed over the seal to snap-engage thereover. The air supply is then turned off, and the clamping plate 23 is removed from the output member 22b. The fibre unit 1, the tubing and the associated breakout unit can then be removed from the injector unit 21. The breakout unit is effective to terminate the optical fibres within the fibre unit 1 ready for connection to fibres at a network node or ONU.

It will be apparent that modifications could also be made to the arrangements described above. For example, the pre-connectorised tails provided on the fibre unit 1 could be replaced by optical connectors which could terminate on an optical connector termination box. Also, the air injector unit 21 of Figures 3 and 4 could have a different number of air injection needles, the spacing between which could be different. Again, the internal diameter of the seal is not necessarily 1mm, this diameter being chosen to be a friction fit around the fibre unit being installed, and this will vary for different fibre units.

## Claims

1. A method of providing an optical communications route between a first location and a second location, the method comprising moving an optical fibre transmission line (1) comprising at least one optical fibre along a pre-installed tubular pathway which passes from the first location to the second location, the optical fibre transmission line (1) being fed to the tubular pathway by a mechanical pushing process and being propelled along the tubular pathway by the mechanical pushing process and by fluid drag of a gaseous medium passed through the tubular pathway towards the second location, characterised in that the first location is inside a customer's premises, the second location is a node of an optical telecommunications network, the tubular pathway passes through an aperture in a wall of said premises, the end of the tubular pathway inside the customer's premises is provided with a seal for the gaseous medium, the optical fibre transmission line is pushed through the seal by the mechanical pushing process, and the gaseous medium is injected into the tubular pathway through the wall thereof downstream of the seal.

2. A method as claimed in claim 1, wherein a portion of the tubular pathway adjacent said end is clamped within a cylindrical housing (23) and the gaseous medium is conducted through the wall of the housing to holes provided in the wall of the tubular pathway.

3. A method as claimed in claim 2, wherein the gaseous medium is conducted into the holes by injector needles (28) provided on the wall of the housing.

4. A method as claimed in claim 3, wherein the injector needles (28) pass thorough a rubber mat (26a) which is sandwiched between the wall of the housing (26) and the wall of the tubular pathway to provide a seal therebetween.

5. A method as claimed in claim 3 or claim 4, wherein the injector needles (28) are supplied with the gaseous medium in pressurised form from an input manifold (27).

## Patentansprüche

1. Verfahren zum Schaffen einer optischen Kommunikationsstrecke zwischen einem ersten Ort und einem zweiten Ort, wobei das Verfahren das Bewegen einer Lichtleitfaser-Übertragungsleitung (1), die wenigstens eine Lichtleitfaser enthält, längs eines im voraus installierten röhrenförmigen Durchlaßwegs, der vom ersten Ort zum zweiten Ort verläuft, umfaßt, wobei die LichtleitfaserÜbertragungsleitung (1) dem röhrenförmigen Durchlaßweg durch einen mechanischen Schubprozeß zugeführt wird und längs des röhrenförmigen Durchlaßwegs durch den mechanischen Schubprozeß und durch den Fluidstirnwiderstand eines gasförmigen Mediums, das durch den röhrenförmigen Durchlaßweg zum zweiten Ort geschickt wird, angetrieben wird, dadurch gekennzeichnet, daß sich der erste Ort in einem Kundenstandort befindet, der zweite Ort ein Knoten eines optischen Telekommunikationsnetzes ist, der röhrenförmige Durchlaßweg durch eine Öffnung in einer Wand des Standorts verläuft, das Ende des röhrenförmigen Durchlaßwegs im Kundenstandort mit einer Dichtung für das gasförmige Medium versehen ist, die Lichtleittaser-Ubertragungsleitung mittels des mechanischen Schubprozesses durch die Dichtung geschoben wird und das gasförmige Medium in den röhrenförmigen Durchlaßweg durch die Wand in Strömungsrichtung hinter der Dichtung eingeleitet wird.

2. Verfahren nach Anspruch 1, bei dem ein Abschnitt des röhrenförmigen Durchlaßwegs in der Nähe des Endes in einem zylindrischen Gehäuse (23) festgeklemmt ist und das gasförmige Medium durch die Wand des Gehäuses zu Löchern geleitet wird, die in der Wand des röhrenförmigen Durchlasses vorgesehen sind.

3. Verfahren nach Anspruch 2, bei dem das gasförmige Medium in die Löcher durch Injektionsnadeln (28), die an der Wand des Gehäuses vorgesehen sind, eingeleitet wird.

4. Verfahren nach Anspruch 3, bei dem die Injektionsnadeln (28) durch eine Gummimatte (26a) verlaufen, die zwischen der Wand des Gehäuses (26) und der Wand des röhrenförmigen Durchlasses sandwichartig angeordnet ist, um dazwischen eine Dichtung zu schaffen.

5. Verfahren nach Anspruch 3 oder Anspruch 4, bei dem die Injektionsnadeln (28) mit dem mit Druck beaufschlagten gasförmigen Medium von einem Einlaßverteiler (27) versorgt werden.

## Revendications

1. Procédé de réalisation d'une voie de communications optiques entre un premier emplacement et un second emplacement, le procédé comprenant le déplacement d'une ligne de transmission à fibre optique (1) comprenant au moins une fibre optique le long d'un passage tubulaire préinstallé qui passe du premier emplacement au second emplacement, la ligne de transmission à fibre optique (1) étant avancée dans le passage tubulaire par un procédé de poussée mécanique et étant propulsée le long du passage tubulaire par le procédé de poussée mécanique et par une traînée de fluide d' un milieu gazeux amené a passer au travers du passage tubulaire vers le second emplacement, caractérisé en ce que le premier emplacement est à l'intérieur des locaux d'un usager, le second emplacement est un noeud d'un réseau de télécommunications optique, le passage tubulaire passe par une ouverture dans un mur desdits locaux, l'extrémité du passage tubulaire à l'intérieur des locaux de l'usager est munie d'un joint pour le milieu gazeux, la ligne de transmission à fibre optique est poussée au travers du joint par le procédé de poussée mécanique, et le support gazeux est injecté dans le passage tubulaire au travers du mur de celui-ci en aval du joint.

2. Procédé selon la revendication 1, dans lequel une partie du passage tubulaire à proximité de ladite extrémité est serrée à l'intérieur d'un logement cylindrique (23) et le milieu gazeux est conduit au travers de la paroi du logement vers des trous ménagés dans la paroi du passage tubulaire.

3. Procédé selon la revendication 2, dans lequel le milieu gazeux est conduit jusque dans les trous par des pointeaux d'injecteur (28) disposés sur la paroi du logement.

4. Procédé selon la revendication 3, dans lequel les pointeaux d'injecteur (28) passent au travers d'une garniture de caoutchouc (26a) qui est prise en sandwich entre la paroi du logement (26) et la paroi du passage tubulaire afin de réaliser un joint entre ceux-ci.

5. Procédé selon la revendication 3 ou la revendication 4, dans lequel les pointeaux d'injecteur (28) reçoivent le milieu gazeux sous une forme sous pression depuis un collecteur d'entrée (27).
